# EUROPÄISCHE PATENTSCHRIFT

(11) **EP 1 246 495 B1**
(45) Veröffentlichungstag und Bekanntmachung des Hinweises auf die Patenterteilung: **27.07.2005**
(21) Anmeldenummer: 02012078.8
(22) Anmeldetag: 30.08.1999
(51) Int. Cl.: H04Q 7/38

(54) **Notrufsystem innerhalb eines Telekommunikationsnetzes**
Emergency call in a telecommunications network
Appel d'urgence dans un réseau de télécommunications

(43) Veröffentlichungstag der Anmeldung: 02.10.2002
(62) Teilanmeldung aus: 99939303.6
(73) Patentinhaber: Swisscom Mobile AG, 3050 Bern (CH)
(72) Erfinder: Lauper, Eric, 3014 Bern (CH)
(74) Vertreter: P&TS Patents & Technology Surveys SA

(56) Entgegenhaltungen:
- WO-A-97/21314
- WO-A-97/23104
- WO-A-98/08350
- WO-A-98/31168
- GB-A- 2 250 400
- US-A- 5 479 482
- US-A- 5 539 924

## Beschreibung

Die vorliegende Erfindung betrifft ein Notrufsystem, das innerhalb eines Telekommunikationsnetzes angewendet werden kann.

Die Patentanmeldung GB-A-2250400 (D. Brown McDougall) beschreibt ein System, um bei einem Notfall automatisch eine vordefinierte Mitteilung an eine vordefinierte Telefonnummerliste in einer vordefinierten Sequenz zu kommunizieren. Dieses System eignet sich beispielsweise, um bei einem Einbruch oder Brand vorerst ausgewählten Nachbarn und dann die Polizei oder die Feuerwehr anzurufen. Eine schnelle Hilfe von verschiedenen Partnern kann damit erreicht werden.

Ein solches System eignet sich aber kaum, um Hilfe bei einem Notfall an Mobilteilnehmern zu leisten, da die angerufenen Partner nicht wissen können, wo der anrufende Mobilteilnehmer sich momentan befindet und wo die Hilfe geleistet werden muss.

Ein Ziel dieser Erfindung ist es, ein Verfahren anzubieten, um Notrufmeldungen zu verbreiten, das sich besser für Mobilteilnehmer eignet.

Die Patentanmeldung WO98/31168 beschreibt ein System, um den Standort eines Mobilteilnehmers, der eine Notlage an eine Zentrale meldet, automatisch zu ermitteln. Weitere Notrufmeldungen von sich in der Umgebung befindenden Mobilteilnehmern werden dann nicht mehr direkt an die Zentrale geleitet, um sie nicht zu belasten. Der Mobilteilnehmer in einer Notlage kann jedoch keine sehr schnelle Hilfe von diesem System erwarten, da die Notrufmeldung nur an die meistens entfernte Zentrale geleitet wird.

Ein anderes Ziel der Erfindung ist es, ein Verfahren anzubieten, mit welchem Mobilteilnehmer in einer Notlage eine schnellere Hilfe erhalten können.

Ein anderes Ziel ist es, ein Verfahren anzubieten, mit welchem Notrufmeldungen schnell und ohne hohe Verbindungskosten an besser gezielte Endgeräte verbreitet werden können.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass eine Notrufmeldung, die von einem Mobilteilnehmer erzeugt wird, vorerst automatisch an Mobilgeräte, die sich in der Umgebung des Mobilteilnehmers befinden, gesendet wird, und dadurch, dass die benannte Notrufmeldung automatisch von einem Notrufdetektor (104) erzeugt wird.

In einer bevorzugten Variante der Erfindung wird die Notrufmeldung als SMS (Short Message System) oder USSD-Meldung (Unstructured Supplementary Services Data) gesendet. Dies hat den Vorteil, dass eine Notrufmeldung kostenlos oder zu niedrigen Kosten fast gleichzeitig an viele Teilnehmer gesendet werden kann, auch wenn der Teilnehmer nur bis zu einem bestimmten Betrag telefonieren darf, beispielsweise bei Prepaid-Karten.

In einer bevorzugten Variante der Erfindung sind Merkmale in der Notrufmeldung enthalten, die eine schnellere Identifikation dieses Teilnehmers und/oder eine schnellere und bessere Hilfe ermöglichen. Beispielsweise kann eine Beschreibung des Mobilteilnehmers und/oder seines Vehikels, und/oder ärztliche Merkmale wie Blutgruppe, und oder Bilder, usw. in der Notrufmeldung enthalten. Vorzugsweise werden diese Merkmale im Mobilgerät, beispielsweise im Identifizierungsmodul des Teilnehmers gespeichert und automatisch übermittelt, wenn eine Notrufmeldung erzeugt wird. Dies hat den Vorteil, dass der Mobilteilnehmer diese nützlichen Angaben nicht selbst während einem Notfall eingeben muss.

In einer Variante enthält die Notrufmeldung nur einen Zeiger zu einem Speicherbereich im Mobilgerät oder in einem Server, wo diese Merkmale abgelegt sind. Auf diese Weise kann ein Mobilteilnehmer, der eine Notrufmeldung empfängt, selbst diese Merkmale abholen, wenn er sie braucht.

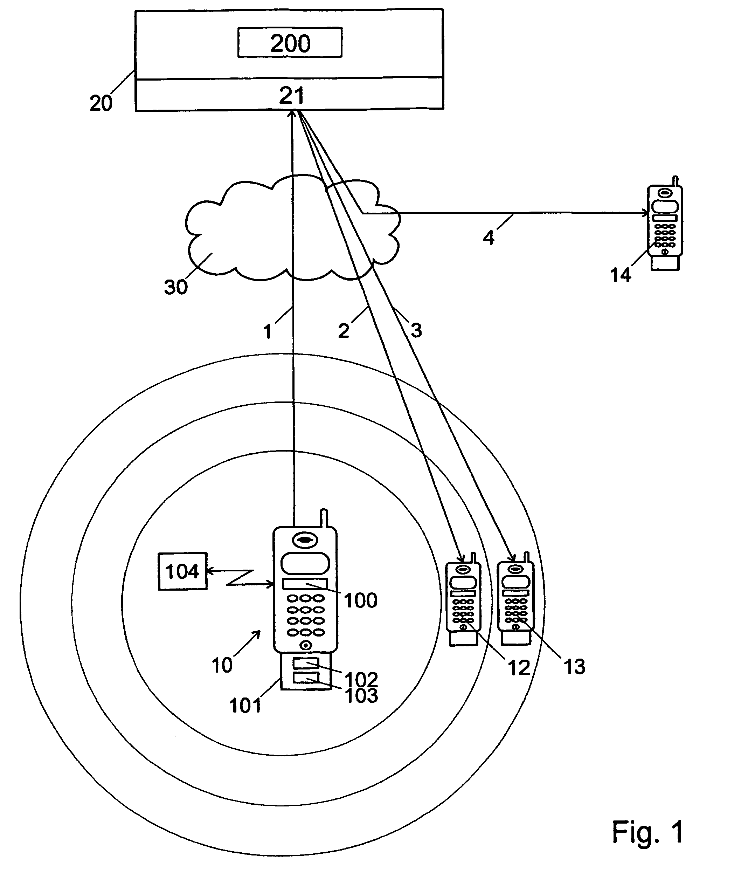

Im folgenden werden anhand der beigefügten einzelnen Figur verschiedene Ausführungsbeispiele der Erfindung näher beschrieben. Die Figur zeigt in schematischer Weise ein System, in welchem eine Notrufmeldung verbreitet wird.

Obwohl diese Erfindung im Detail den speziellen Fall der Anwendung der Erfindung in einem GSM-Mobilfunknetz 30 beschreibt, wird der Fachmann verstehen, dass dieses Verfahren auch mit anderen Typen von zellularen Mobilfunknetzen, beispielsweise mit AMPS, TDMA, CDMA, TACS, PDC, HCSCD, GPRS, EDGE oder UMTS-Netzen, eingesetzt werden kann.

Die Nummer 10 zeigt das Mobilendgerät eines Mobilteilnehmers, der sich in einer Notlage befindet. Andere Mobilendgeräte im selben Mobilfunknetz 30 tragen die Bezugszeichen 12 und 13. Die Mobilendgeräte 10, 12, 13 können beispielsweise Mobiltelefone, Mediatelefone, Laptops, Palmtops oder Rechner mit einer Mobiltelekommunikationsschnittstelle sein. Das Endgerät 10 weist ein Identifizierungsmodul 101 auf, beispielsweise eine SIM-Karte (Subscriber Identification Module), mit vorzugsweise im selben Chip integrierten verschiedenen Speicherbereichen 102, 103. In einer bevorzugten Variante verfügt das Endgerät 10 ausserdem über ein Bedienungselement 100, um eine Notrufmeldung manuell sehr schnell zu erzeugen. Das Bedienungselement 100 kann beispielsweise ein Knopf sein, oder ein auf dem Bildschirm des Endgerätes dargestelltes GUI-Element (Graphical User Interface), beispielsweise eine Ikone, ein Menüpunkt, usw.

Das Endgerät 10 ist mit einem Notrufdetektor 104 verbunden, oder in einem solchen Detektor integriert bzw. einen solchen Detektor enthält. Der Detektor 104 kann bestimmte Notlagen automatisch feststellen und das Mobilgerät 10 anfordern, eine Notrufmeldung zu senden. Je nach Anwendung, kann der Detektor 104 beispielsweise Einbrüche, beispielsweise in Wohnungen oder Autos, Eigentumsdelikte, Brand, Bewusstseinverluste, Unfälle, Stau auf der Autobahn, usw., feststellen. Der Detektor 104 kann beispielsweise ein Stoss-Detektor, beispielsweise mit einer Beschleunigungsmessvorrichtung, sein

Das Bezugszeichen 14 zeigt ein Endgerät, das auch aus dem Mobilnetz 30 erreicht werden kann. Das Endgerät 14 kann beispielsweise ein an einem Fixnetz angeschlossenes Telefon, ein Fax, ein PC, ein Mobilgerät, usw. sein. In dieser Erfindung wird das Endgerät 14 von einem Benutzer benutzt, den der Mobilteilnehmer 10 bei Notfällen informieren will. Das Endgerät 14 kann beispielsweise von der Familie, von Freunden, von der Polizei, der Feuerwehr, einem Krankenhaus, usw., benutzt werden.

Mit 20 ist eine feste Vorrichtung im Mobilfunknetz 30 dargestellt. Die Vorrichtung 20 kann je nach Ausführungsvariante und je nach Mobilfunknetz ein Feststationteilsystem, beispielsweise eine Basisstation, eine Mobilvermittlungsstelle, beispielsweise ein MSC (Mobile Switching Service Center), ein Server im Netz, oder eine Kombination aus diesen Komponenten sein. Die Vorrichtung 20 enthält ein Standortbestimmungssystem 21, oder kann auf ein solches System zurückgreifen. Die Vorrichtung 20 enthält ausserdem einen Speicherbereich 200, in welchem ein Softwareprogramm gespeichert ist, das von geeigneten Datenverarbeitungsmitteln durchgeführt werden kann.

Notrufmeldungen werden auf Initiative des Detektors 104 automatisch erzeugt.

Im Speicherbereich 102 des Mobilgeräts, beispielsweise im Identifizierungsmodul 101, wird mindestens ein Merkmal des Mobilteilnehmers gespeichert. Dieses oder diese Merkmale können beispielsweise eine schnellere Identifizierung des Mobilteilnehmers und/oder eine schnellere und effizientere Hilfe erlauben. Diese Merkmale wurden in einer ersten Variante von dem benannten Mobilteilnehmer selbst eingegeben und gespeichert. In einer Variante wurden sie von einem Dritten, beispielsweise vom Netzbetreiber und/oder von einem Dienstanbieter, beispielsweise einem Arzt oder einer Versicherung, über das Netz 30 ferngeladen, beispielsweise anhand des im Patent EP0689368 beschriebenen SICAP-Verfahrens. In einer noch anderen Variante wurden sie über eine kontaktlose Schnittstelle im Nahbereich, beispielsweise über eine BlueTooth oder IrdA-Schnittstelle, aus einem externen Gerät ferngeladen. Verschiedene Merkmale im selben Speicherbereich 102 können auch über verschiedene Kanäle im Speicherbereich 102 geladen werden.

Je nach Anwendung und Gefallen des Mobilteilnehmers 10 können die im Speicherbereich 102 gespeicherten Merkmale beispielsweise unter anderem den Namen des Mobilteilnehmers, seine Blutgruppe, sein Geschlecht, seine Haarfarbe, sein Alter, seinen Auto-Typ, Farbe und Schildnummer usw. umfassen. In einer Variante können diese Merkmale auch ein Bild des Mobilteilnehmers und/oder seines Autos enthalten. Diese Merkmale werden dann mit der Notrufmeldung verknüpft. In einer Variante enthält die Notrufmeldung nur einen Zeiger, beispielsweise eine URL-Adresse, zu diesen Merkmalen; Teilnehmer, die die Notrufmeldung empfangen, können dann mit diesem Zeiger auf die gesuchten Merkmale zurückgreifen. In diesem Fall können mindestens gewisse Merkmale statt im Mobilgerät in einem Server abgelegt werden.

Wie schon erwähnt, kann die Notrufmeldung je nach Mobilfunknetz 30 beispielsweise als SMS oder USSD-Meldung, als GPRS-Paquet, als E-Mail, beispielsweise innerhalb eines WAP-Systems (Wireless Application Protocol), usw. übertragen werden. Vorzugsweise wird eine kostenlose oder zumindest billige Übertragungsart verwendet, damit eine Notrufmeldung auch an viele Teilnehmer gesendet werden kann, wenn der vorbezahlte Kredit des Mobilteilnehmers ausgeschöpft oder fast ausgeschöpft ist. Fax-Nachrichten oder gesprochene Meldungen, vorzugsweise mit einem Stimmensynthesizer generierte Meldungen, können aber auch im Rahmen dieser Erfindung verwendet werden.

Vorzugsweise ist die Identifizierungskarte 101 des Mobilteilnehmers so programmiert, dass kostspielige Notrufmeldungen auch gesendet werden können, wenn der Kredit des Mobilteilnehmers völlig ausgeschöpft ist. Eine solche Identifizierungskarte ist in dem Gebrauchsmuster DE-U-29800711.8 beschrieben.

Das persönliche Identifizierungsmodul 101 enthält vorzugsweise ein elektronisches Zertifikat, mit welchem Notrufmeldungen elektronisch signiert werden können, damit jeder Empfänger 20, 12, 13, 14 die Identität des Senders prüfen kann. Vorzugsweise werden ausserdem mindestens gewisse vertrauliche Daten in der Notrufmeldung elektronisch verschlüsselt, so dass nur erlaubte Empfänger diese vertraulichen Daten entschlüsseln können. Beispielsweise werden ärztliche Merkmale des Benutzers mit einem öffentlichen Schlüssel so verschlüsselt, dass nur erlaubte Ärzte, die über den passenden privaten Schüssel verfügen, auf diese Daten zurückgreifen können.

Die vom Teilnehmer 10 gesendete Notrufmeldung wird über das Mobilfunknetz 30 an die Vorrichtung 20 gesendet (Pfeil 1), die diese Meldung eventuell ergänzt, beispielsweise mit zusätzlichen Benutzermerkmalen, und vorerst an andere Mobilgeräte 12, 13, die sich in der Umgebung des Mobilteilnehmers 10 befinden, weiterleitet (Pfeil 2). Die Notrufmeldung kann auch in der Vorrichtung 20 in einer Meldung eines anderen Typs konvertiert werden. Beispielsweise kann eine SMS-Meldung in ein E-Mail, ein Fax oder eine mit einem Stimmensynthesizer generierte Sprachmeldung konvertiert werden. Es ist auch möglich, mehrere Typkonvertierungen derselben Meldung durchzuführen, damit die Notrufmeldung an möglichst viele Endgeräte 12, 13, 14 verschiedener Typen verbreitet werden kann.

In einer ersten Variante der Erfindung wird die Notrufmeldung gleichzeitig an alle Mobilgeräte 12, 13, die dieselbe Basisstation wie der benannte Mobilteilnehmer 10 verwenden, gesendet.

In einer anderen Variante der Erfindung wird die Position des anrufenden Mobilteilnehmers 10 von dem Standortbestimmungssystem 21 ermittelt. Das Standortbestimmungssystem 21 kann diese Position beispielsweise aus trigonometrischen Berechnungen von Signalen einer Vielzahl von Basisstationen ermitteln. Die Position des Teilnehmers kann aber auch vom Mobilgerät 10 ermittelt werden, beispielsweise mit einem GPS-Empfänger (Global Positioning System) und als Teil der Notrufmeldung 1 dem System 21 kommuniziert werden. Die Notrufmeldung wird vorerst auf Basis der von dem Standortbestimmungssystem 21 ermittelten Positionsangabe an alle Mobilteilnehmer 10, 12, 13 in der Umgebung verbreitet. Beispielsweise kann die Notrufmeldung vorerst nur an Mobilgeräte 12 geleitet werden, die sich nah vom Mobilteilnehmer 11 befinden, und erst in einer weiteren Phase an weiter entfernte Geräte 13 verbreitet werden. Auf diese Weise kann die Notrufmeldung progressiv an die sich immer weiter vom Mobilteilnehmer befindenden Mobilgeräte 12, 13 verbreitet werden.

Der Benutzer eines Mobilgerätes 12 oder 13, das die Notrufmeldung erhalten hat, kann dann eine Bestätigung an den Mobilteilnehmer 10 und/oder an die Vorrichtung 20 senden und somit erklären, dass er bereit ist, Hilfe zu leisten. Die Notrufmeldung wird vorzugsweise nur solange weiter verbreitet, bis ein Mobilgerät 12, 13 eine solche Bestätigung gesendet hat. Je nach Variante und nach Art von Notmeldung kann aber auch die Meldung solange verbreitet werden, bis beispielsweise ein als solcher identifizierter Arzt oder Polizist seine Bereitstellung erklärt hat.

Wenn alle aktiven Teilnehmer innerhalb eines definierten Gebiets, beispielsweise innerhalb einer Zelle im Mobilfunknetz 30, erfolglos erreicht wurden, wird die geographische Verbreitung der Notrufmeldung unterbrochen. Die Notrufmeldung wird dann an vom benannten Teilnehmer 10 vordefinierten Endgeräte 14 gesendet.

Zu diesem Zweck kann der Mobilteilnehmer 10 eine Liste von Endgeräten 14 definieren, an welche unbeantwortete Notmeldungen adressiert werden müssen. Diese Liste kann beispielsweise die Telefonnummer oder E-Mail-Adressen von Freunden, vom Hausarzt, von der Polizei usw. umfassen. Vorzugsweise wird die Notrufadressenliste in einem Speicherbereich 103 des Mobilgerätes 10, beispielsweise im Identifizierungsmodul 101, abgelegt. Die Liste kann beispielsweise aus einem Subset des im Identifizierungsmodules 101 gespeicherten persönlichen Rufnummerverzeichnisses bestehen. In einer Variante wird die Notrufadressenliste jedoch eher in einem von einer Mobilvermittlungsstelle (MSC) im Telekommunikationnetz 30 zugänglichen Speicherbereich, beispielsweise in der Heimdatei (HLR), gespeichert. Die Liste wird vorzugsweise verschlüsselt, damit nur Berechtigte auf sie zurückgreifen können.

Die Notrufmeldungen können an alle Endgeräte in der Liste weitergeleitet werden (Pfeil 4). In einer Variante kann der Mobilteilnehmer die Endgeräte 14 in der Liste in einer Hierarchie einordnen. Die Notrufmeldung wird in diesem Fall zuerst an Endgeräte, die die höchste Stufe in dieser Hierarchie haben und progressiv an in unteren Stufen angeordnete Endgeräte verbreitet. Die Verbreitung hört beispielsweise auf, wenn ein angerufener Benutzer 14 antwortet oder eine Bestätigung sendet.

Der Mobilteilnehmer 10 kann vorzugsweise selbst definieren, welche Adressen er in der benannten Notrufadressenliste 103 eintragen will. Neue Adressen können beispielsweise über Eingabemittel des Mobilgerätes, über Internet und/oder über ein externes Gerät im Nahbereich, das über eine kontaktlose Schnittstelle mit dem Mobilgerät 100 verbunden ist, eingegeben werden. Vorzugsweise können ausserdem erlaubte externe Dritte Adressen in der Notrufadressenliste 103 eintragen, beispielsweise ausgewählte Ärzte, Autoreparateure, usw.. Diese Liste kann auch dynamisch aktualisiert und/oder ergänzt werden, beispielsweise in Abhängigkeit des momentanen Standorts des Mobilteilnehmers 10.

Im Rahmen dieser Erfindung ist es auch möglich, mehrere Notrufadressenliste 103 in einem einzigen Endgerät abzulegen, die verschiedenen Notsituationen entsprechen können. Beispielsweise kann ein Autofahrer definieren, dass bei Stau auf der Autobahn vorerst die Nachbarauto, und dann die Polizei informiert werden muss, während bei Unfällen auch die Familie und der Hausarzt eine Notrufmeldung erhalten müssen. Zeit- und Standorts-abhängige Notrufadressenlisten können auch im Rahmen dieser Erfindung definiert werden.

Adressen in der Notrufadressenliste können vorzugsweise verschiedenen Typen von Endgeräten entsprechen, die durch verschiedene andere Netzen erreicht werden können. Beispielsweise können die vom Teilnehmer definierten Adressen andere Mobilgeräte, beispielsweise GSM-Mobiltelefone, Fixnetzgeräte, E-Mail-Adressen und/oder Faxempfängern entsprechen. In diesem Fall erfolgt im Systemteil 20 eine Konvertierung des Meldungstyps.

Wenn der Mobilteilnehmer 10, der eine Notrufmeldung 1 gesendet hat, sich weiterbewegt, wird vorzugsweise sein Standort vom Standortbestimmungssystem 21 weiterüberwacht. Die Notrufmeldung wird in diesem Fall an andere sich in der neuen Umgebung des Mobilteilnehmers befindende Mobilgeräte, verbreitet. Dadurch folgt das Verbreitungsgebiet der Notrufmeldung automatisch den sich bewegenden Mobilteilnehmer. Dieses Merkmal kann beispielsweise bei Entführungen oder Eigentumsdelikten nützlich sein.

## Patentansprüche

1. Verfahren, um eine Notrufmeldung eines Mobilteilnehmers (10) innerhalb eines Telekommunikationsnetzes (30) zu verbreiten, wobei die Notrufmeldung vorerst automatisch an Mobilgeräte (12, 13), die sich in der Umgebung des Mobilteilnehmers befinden, verbreitet wird, **dadurch gekennzeichnet, dass** die benannte Notrufmeldung automatisch auf Initiative eines Notrufdetektors (104) erzeugt wird.

2. Verfahren gemäss Anspruch 1, **dadurch gekennzeichnet, dass** die Notrufmeldung mindestens ein gespeichertes Merkmal des benannten Mobilteilnehmers oder einen Zeiger zu einem solchen Merkmal enthält.

3. Verfahren gemäss Anspruch 2, **dadurch gekennzeichnet, dass** das benannte mindestens ein Merkmal in einem Speicherbereich (102) des Identifizierungsmoduls (101) des Mobilteilnehmers gespeichert wird.

4. Verfahren gemäss einem der Ansprüche 2 bis 3, **dadurch gekennzeichnet, dass** das benannte mindestens ein Merkmal das Geschlecht, die Haarfarbe, das Alter, den Autotyp, die Autofarbe, die Autoschildnummer und/oder ein Bild des benannten Mobilteilnehmers umfasst.

5. Verfahren gemäss einem der Ansprüche 1 bis 4, **dadurch gekennzeichnet, dass** die benannte Notrufmeldung als SMS-Meldung gesendet wird.

6. Verfahren gemäss einem der Ansprüche 1 bis 4, **dadurch gekennzeichnet, dass** die benannte Notrufmeldung als USSD-Meldung gesendet wird.

7. Verfahren gemäss einem der Ansprüche 1 bis 4, **dadurch gekennzeichnet, dass** die benannte Notrufmeldung als E-Mail gesendet wird.

8. Verfahren gemäss einem der Ansprüche 1 bis 7, **dadurch gekennzeichnet, dass** die Notrufmeldung vorerst gleichzeitig an alle Mobilgeräte (12, 13), die derselben Basisstation (20) wie der benannte Mobilteilnehmer (10) zugeordnet sind, gesendet wird.

9. Verfahren gemäss einem der Ansprüche 1 bis 8, **dadurch gekennzeichnet, dass** die Position der benannten Mobilgeräte innerhalb einer Zelle des Telekommunikationsnetzes durch ein Standortbestimmungssystem (21) im benannten Telekommunikationsnetz (30) ermittelt wird, und dass die Notrufmeldung vorerst auf Basis dieser Positionsangabe an andere Mobilgeräte (12, 13) in der Umgebung verbreitet wird.

10. Verfahren gemäss Anspruch 9, **dadurch gekennzeichnet, dass** die Notrufmeldung progressiv an die sich immer weiter vom Mobilteilnehmer befindenden Mobilgeräte (12; 13) verbreitet wird.

11. Verfahren gemäss Anspruch 10, **dadurch gekennzeichnet, dass** die Notrufmeldung solange weiter verbreitet wird, bis ein Mobilgerät (12, 13) eine Bestätigung gesendet hat.

12. Verfahren gemäss einem der Ansprüche 1 bis 11, **dadurch gekennzeichnet, dass** der Standort des benannten Mobilteilnehmers (10) auch nach der Sendung (1) der benannten Notrufmeldung überwacht wird, und dass die benannte Notrufmeldung an andere sich in der neuen Umgebung des Mobilteilnehmers befindende Mobilgeräte verbreitet wird, wenn dieser Standort sich ändert.

## Claims

1. Method for distributing an emergency call message of a mobile user (10) within a telecommunication network (30), the emergency call message being first automatically distributed to mobile devices (12, 13) that are in the vicinity of the mobile user, **characterized in that** said emergency call message contains is generated automatically on the initiative of an emergency call detector (104).

2. Method according to claim 1, **characterized in that** the emergency call message contains at least one characteristic of said mobile user or a pointer to such a characteristic.

3. Method according to claim 2, **characterized in that** said at least one characteristic is stored in a memory area (102) of the mobile user's identification module (101).

4. Method according to one of the claims 2 to 3, **characterized in that** said at least one characteristic includes the gender, the hair colour, the age, the car type, the car colour, the car plate number and/or a picture of said mobile user.

5. Method according to one of the claims 1 to 4, **characterized in that** said emergency call message is sent as SMS message.

6. Method according to one of the claims 1 to 4, **characterized in that** said emergency call message is sent as USSD message.

7. Method according to one of the claims 1 to 4, **characterized in that** said emergency call message is sent as e-mail.

8. Method according to one of the claims 1 to 7, **characterized in that** the emergency call message is first sent simultaneously to all mobile devices (12, 13) assigned to the same base station (20) as said mobile user (10).

9. Method according to one of the claims 1 to 8, **characterized in that** the position of said mobile devices within a cell of the telecommunication network is determined through a location-determining system (21) in said telecommunication network (30) and **in that** the emergency call message is distributed first on the basis of this position indication to other mobile devices (12, 13) in the vicinity.

10. Method according to the claim 9, **characterized in that** the emergency call message is distributed progressively to mobile devices (12; 13) that are increasingly further away from the mobile user.

11. Method according to the claim 10, **characterized in that** the emergency call message is further distributed so long until a mobile device (12, 13) has dispatched a confirmation.

12. Method according to one of the claims 1 to 11, **characterized in that** the location of said mobile user (10) is also monitored after said emergency call message (1) has been sent, and **in that** said emergency call message is forwarded to other mobile devices in the new vicinity of the mobile user if this location changes.

## Revendications

1. Procédé pour diffuser un message de détresse d'un abonné mobile (10) dans un réseau de télécommunication (30), le message de détresse étant d'abord diffusé automatiquement à des appareils mobiles (12, 13) qui se trouvent dans le voisinage de l'abonné mobile, **caractérisé en ce que** ledit message de détresse est généré automatiquement sur l'initiative d'un détecteur de détresse (104).

2. Procédé selon la revendication 1, **caractérisé en ce que** le message de détresse contient au moins une caractéristique mémorisée dudit abonné mobile ou un pointeur vers une telle caractéristique.

3. Procédé selon la revendication 2, **caractérisé en ce que** ladite au moins une caractéristique est stockée dans une zone de mémoire (102) du module d'identification (101) de l'abonné mobile.

4. Procédé selon l'une des revendications 2 ou 3, **caractérisé en ce que** ladite au moins une caractéristique comprend le sexe, la couleur de cheveux, l'âge, le type de voiture, la couleur de voiture, le numéro d'immatriculation de voiture et/ou une image dudit abonné mobile.

5. Procédé selon l'une des revendications 1 à 4, **caractérisé en ce que** ledit message de détresse est envoyé sous la forme de message SMS.

6. Procédé selon l'une des revendications 1 à 4, **caractérisé en ce que** ledit message de détresse est envoyé sous la forme de message USSD.

7. Procédé selon l'une des revendications 1 à 4, **caractérisé en ce que** ledit message de détresse est envoyé sous la forme d'un e-mail.

8. Procédé selon l'une des revendications 1 à 7, **caractérisé en ce que** le message de détresse est d'abord envoyé simultanément à tous les appareils mobiles (12, 13) utilisant la même station de base (20) que ledit abonné mobile (10).

9. Procédé selon l'une des revendications 1 à 8, **caractérisé en ce que** la position la position desdits appareils mobiles à l'intérieur d'une cellule du réseau de télécommunication est déterminée par un système de localisation (21) dans ledit réseau de télécommunications (30) et que le message de détresse est d'abord diffusé sur la base de ces données de position à d'autres appareils mobiles (12, 13) du voisinage.

10. Procédé selon la revendication 9, **caractérisé en ce que** le message de détresse est diffusé progressivement à des appareils mobiles (12; 13) se trouvant toujours plus loin de l'abonné mobile.

11. Procédé selon la revendication 10, **caractérisé en ce que** le message de détresse est diffusé toujours plus loin, jusqu'à ce qu'un appareil mobile (12, 13) envoie une confirmation.

12. Procédé selon l'une des revendications 1 à 11, **caractérisé en ce que** la position dudit abonné mobile (10) est aussi surveillée après l'envoi (1) dudit message de détresse, et **en ce que** ledit message de détresse est diffusé à d'autres appareils mobiles se trouvant dans le nouveau voisinage de l'abonné mobile, lorsque cette position change.
